Europäisches Patentamt

European Patent Office

Office européen des brevets

(19)

(11) Publication number: **0 084 704**
A2

(12) **EUROPEAN PATENT APPLICATION**

(21) Application number: **82306121.3**

(22) Date of filing: **17.11.82**

(51) Int. Cl.³: **G 01 C 19/56**

(30) Priority: **21.01.82 US 341229**

(43) Date of publication of application: **03.08.83**
Bulletin 83/31

(84) Designated Contracting States: **BE CH DE FR GB IT LI SE**

(71) Applicant: **WATSON INDUSTRIES, INC., 3041 Melby Road, Eau Claire Wisconsin 54701 (US)**

(72) Inventor: **Watson, William S., 3026 Aspen Court, Eau Claire Wisconsin 54701 (US)**

(74) Representative: **Ellis, John Clifford Holgate et al, MEWBURN ELLIS & CO. 2/3 Cursitor Street, London EC4A 1BQ (GB)**

(54) **Angular rate sensor apparatus.**

(57) An angular rate sensor structure displaying high immunity to noise and feedback vibration is disclosed. Mounting means (15, 31A) supports by one end each of a pair of vibratory elements (10, 30) in symmetrical alignment about a nodal axis (20). The vibratory elements (10, 30) are driven in a first mode of movement, in direct opposition to one another about the nodal axis (20). Sensing means detect movement of the vibratory elements (10, 30) in directions other than in the first mode of movement resulting from application of external angular rate forces applied to the vibratory elements (10, 30). In one illustrated embodiment the vibratory elements (10) each comprise a pair of rectangular piezoelectric bender crystals (10A, 10B) joined end to end but rotated 90° from one another, whilst in another embodiment the vibratory elements (30A, 30B) are driven electromagnetically in the first mode of movement, and their vibration in other directions is sensed by electromagnetic sensing means (38, 39).

ANGULAR RATE SENSOR APPARATUS

This specification cross references and incorporates portions of my co-pending U.S. Patent Application Serial No. 280,500 entitled RESONANCE DRIVE OSCILLATOR CIRCUIT, filed on July 6, 1981.

This invention relates generally to angular rate sensor structures, and in particular to a mounting apparatus for dual vibrating element sensor structures particularly applicable to sensor instrumentation applications.

The instrumentation sensor art has for many years used gyroscopic rate of turn instruments having a spinning gyro. The gyro when forced to turn about an axis perpendicular to its spin axis, exerts a measurable couple force that is proportional to the rate of turn being sensed. Such gyro instrumentation is generally expensive due to the precision involved in its design, construction and operation.

More recently, instrumentation sensors have been developed that require no rotating parts but operate on the principal of vibration of constrained actuator masses. Such vibrating masses may take a number of different configurations such as reed members, piezoeletric crystals, or electro-magnetic members.

The principle of operation of vibratory mass instrumentation sensors is fairly simple. If the mass is vibrated or maintained in oscillation in a straight line along which it is guided by some constraint, the oscillating mass will not apply any force (other than its own weight) in a direction transverse to the guide as long as the guide maintains a constant orientation in space. However, if the guide is forced to rotate about an axis at right angles to itself, the oscillating member will feel the forces applied to it through the guide member and will respond to such

-2-

applied forces by generating a signal or a change in vibratory motion that can be detected by the sensing circuit or mechanism. For example, when a piezoelectric crystal vibratory member is used, the crystal will respond to such applied force by generating alternating pulsating signals proportional to the applied force. When an electromagnetic vibratory sensing system is used, the sensor will respond to such applied force by causing a detectable change in the characteristics of the sensed electomagnetic field. Similarly, when a capacitive sensing system is used, the vibrating element will respond to such applied force by causing a disturbance or detectable change in the sensed capacitive environment. Similar analogies can be made with respect to other forms of sensing detection, such as electro-optics and the like.

A description of the principles of vibrating mass angular rate sensor structures in general, and as specifically applied to such a system incorporating a piezoelectric crystal sensor structure, is detailed in my co-pending patent application entitled Resonance Drive Oscillator Circuit, Serial No. 280,500 filed on July 6, 1981, and in my published article entitled "Piezoelectric Vibrating Beam Rate Gyro" published in the Navy Technical Disclosure Bulletin Vol. IV, No. 6, June 1979. To the extent such disclosures are relevant to an understanding of this invention, they are herein incorporated by reference.

In the past, the primary emphasis in the design of vibratory angular rate sensor structures, has been in the details of construction of the vibrating mass itself, or in the circuitry used to drive the mass and/or to detect and analyze the sensed signal. A common problem associated with prior art vibrating element angular rate sensor structures which also exhibit the desired sensitivity, is that they are inherently sensitive to acoustic interference, external

-3-

noise or feed-back vibration and acceleration sensitivity and typically display a limited frequency response. To minimize the effect of "external" and "feed-back" vibratory noise on the operation of the vibrating sensor element, expensive packaging configurations are required and extreme precautions in mounting the angular rate sensor housing apparatus must be be followed. Such mounting precautions, besides adding to the cost of the unit installation, depend for their integrity upon the operator or technician performing the installation.

Thus, it would be desirable in the art to have a vibratory angular rate sensor having the operative sensitivity and accuracy required, yet one which displays a high rejection capability to externally applied and internal feed-back vibratory noise, in a manner that eliminates or minimizes special precautions in the mounting of the completed unit. The present invention provides an angular rate sensor structure that satisfies the above criteria. The present invention employs a pair of vibratory sensor elements mounted in a unique manner, sometimes herein referred to as a "tuning fork" configuration, in a manner that provides immunity from outside vibrational noise as well as from vibratory feed-back from the drive source itself.

While angular rate sensors in the past have used what might appear as "tuning fork" configurations (see for example U.S. Patents 2,503,340 dated July 11, 1950 and 2,817,779 dated December 24, 1957) such structures did not employ the tuning fork principle in the same manner as contemplated by this invention. In both of the structures described in these patents, the principle of rate sensing measurement depended upon oscillatory torque of the entire system assembly along the sense axis. The inertia of such device necessarily limits its responsiveness or effectiveness, unless the torquing forces are quite high. In such a case vibratory radiation in torsion becomes a limiting factor to the sensor.

-4-

To avoid the above prior art problems, later developments used lightweight and active vibratory sensing elements as, for example, illustrated in U.S. Patent 3,842,681 issued on October 23, 1974. While the improved structure provided a torsional drive and vibratory response on the sense-crystal that was proportional to the angular rate, by its very nature, such structure displayed a low resonant frequency which limited its sensing bandwidth, and the torsional vibration and acoustic problems associated with such structure were significant.

The present invention effectively addresses and overcomes most of the above-mentioned deficiencies of prior art vibratory element angular rate sensors. The principles of the present invention are applicable not only to piezoelectric crystal sensing elements, but can be implemented by using magnetic drive fields for the vibratory element and any appropriate sensing means such as magnetic, electroptic-or-capacitive sensing-configurations. The present invention provides a cost-effective angular rate sensor that is relatively insensitive to acoustic interference, external or feed-back vibration and acceleration vibration while displaying a broad frequency response, and one which requires minimal installation precautions or expense. In short, the present invention provides a simple and effective means for significantly reducing most of the error sources encountered in prior art vibrating element angular rate sensors.

The present invention provides an improved angular rate sensor structure having a high degree of accuracy and sensitivity, yet being relatively insensitive to externally applied noise and vibration signals. The sensor structure of this invention practically eliminates the emission of vibratory signals through its mounting base or housing that could cause undesirable and error

-5-

causing feedback signals, thereby minimizing special requirements and precautions typically heretofore followed in the mounting of angular rate sensor structures.

The sensor structure employs a pair of vibratory sensor elements mounted for physical vibration or movement in direct opposition to one another about a nodal axis. Appropriate drive means are provided for energizing the pair of sensor elements for operation in a first mode of movement, for direct opposing motion relative to one another about the nodal axis. When operating in such first mode of movement, the respective vibrational forces transmitted from the vibrating sensor elements as a result of their movement, to the mounting means, cancel along the nodal axis in a manner such that transmission of any vibrational forces through the sensor mounting structure is negligible. Conversely, external noise vibration or acceleration forces transmitted through the mounting structure to the vibrating sensor elements, is translated through the pair of sensor elements in exact opposition to one another, causing the pair of sensor elements to cancel out the effect of such noise or acceleration forces. Sensing means are operatively connected with at least one of the vibratory sensor elements for producing a sensed output signal in response to a change in the movement of the sensor element from its first vibratory mode of operation.

According to one embodiment of the invention, the vibratory sensor elements comprise a pair of piezoelectric bender crystal elements symmetrically disposed and mounted in cantilevered, generally parallel manner about the nodal axis. Each of the vibratory crystal members includes a driver crystal element and a sense crystal element. In such arrangement, the sensing means may comprise an appropriate connection to, and possible interconnection of the sense crystal element portion(s)

-6-

of the vibratory elements, for detecting electrical signals generated within the sense crystal element(s) in response to an angular rate movement to which the sensor apparatus is subjected.

According to another embodiment of the invention, the vibratory sensor elements may comprise a pair of mechanically vibrating elements driven in direct oppositional movement to one another, preferrably by an electromagnetic driver means. Movement of one or both of the vibratory elements in response to an externally applied angular rate force can be detected electromagnetically by a simple electromagnetic coil structure, optically, capacitively, or by other suitable techniques.

While the present invention will be described with respect to two preferred embodiments of the invention which illustrate the opposed configuration for mounting the vibratory elements of the present invention, it will be understood that other techniques could also be used within the spirit and intent of this invention. Similarly, while a particular configuration of piezoelectric bender crystals is illustrated with respect to the preferred embodiment of the invention, it will be understood that other crystal or vibratory element configurations and structures could be employed. Further, while particular sensing means are illustrated with respect to depicting movement of one or more of the vibratory elements from its normal vibrational mode of operation, it will be understood that other sensing means could equally well be employed within the spirit and intent of this invention. These and other modifications of the invention will become apparent to those skilled in the art, in light of the following description of preferred embodiments of this invention.

-7-

Referring to the Drawing, wherein like numerals represent like parts throughout the several views:

Figure 1 is a perspective view illustrating a first embodiment of an angular rate sensor apparatus constructed according the principles of this invention, and illustrating application of the invention with piezoelectric crystal vibrating members;

Figure 2 is a side elevational view of the angular rate sensor apparatus illustrated in Fig. 1;

Figure 3 is a top plan view of the angular rate sensor apparatus illustrated in Fig. 1;

Figure 4 is a perspective view illustrating a second embodiment of an angular rate sensor apparatus constructed according to the principles of this invention, illustrating applicability of the invention to an electromagnetically driven structure;

Figure 5 is a side elevational view, with portions thereof broken away, of the angular rate sensor apparatus illustrated in Fig. 4; and

Figure 6 is a top plan view of the angular rate sensor apparatus illustrated in Fig. 4.

This invention employs a new configuration of elements arranged in a manner so as to provide an improved vibrating element angular rate sensor. The sensor structure employs two identical vibrating elements mounted and driven so as to vibrate in opposition to one another, similar to the principles employed in a tuning-fork. The vibrating elements may, for example, comprise piezoelectric bender crystals, or electromagnetically responsive vibrating elements as discussed in more detail hereinafter. The vibrating elements are preferably secured at one end by a mounting mechanism and project outwardly therefrom in generally parallel, cantilevered manner toward a "free" end. The

-8-

vibratory elements are generally lightweight and susceptible to controlled active motion at their respective free ends in response to an applied oscillatory drive signal. The vibratory elements are driven (vibrated) in an oscillation plane in opposition to each other about a mounting or nodal axis of symmetry. Since the vibrating elements are driven for motion in direct opposition to one another, their combined vibrational forces reflected back to the mounting base form an acoustic node at the mounting base axis of symmetry, resulting in no externally transmitted vibrational forces as a result of the motion of the vibrating elements. Conversely, any external vibration noise that would otherwise be transmitted through the mounting base to the vibrating elements (in prior art structures to a single vibrating element) is equally applied to both of the opposed vibrating elements. Since the vibrating elements are moving in direct opposition to one another, the effect of the received vibration noise is nulled out.

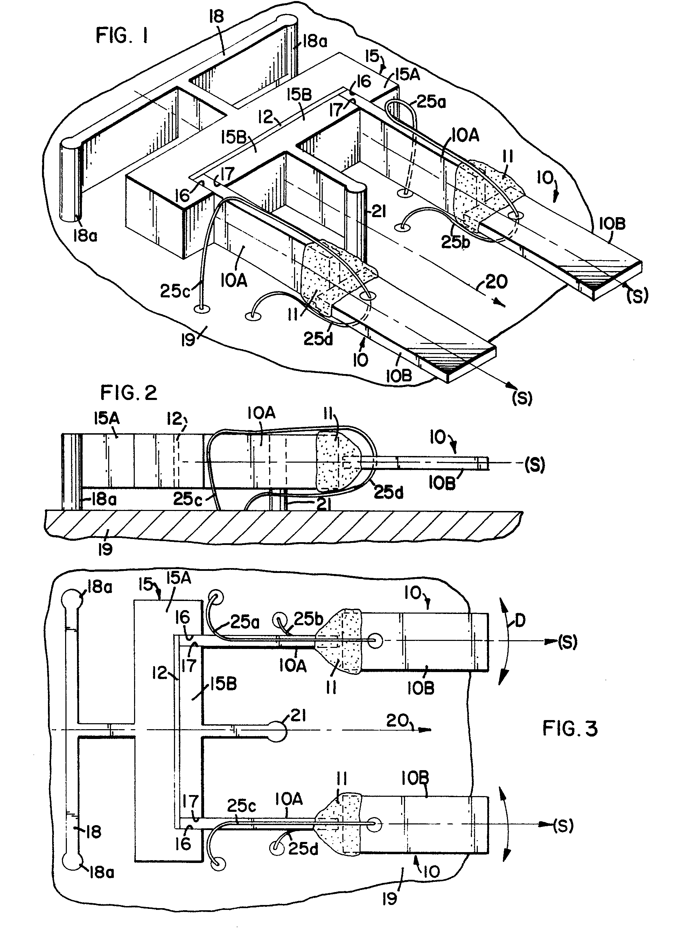

A first embodiment of the invention is illustrated in Figs. 1 through 3. The first embodiment illustrates application of the invention to a sensor structure using piezoelectric sensor members. Referring to Figs. 1 through 3, a pair of piezoelectric vibrating elements, generally designated at 10, are constructed for operation in the manner generally described in my referenced article "Piezoelectric Vibrating Beam Rate Gyro", and in my co-pending patent application "Resonance Drive Oscillator Circuit", Serial No. 280,500 filed July 6, 1981. To the extent that the disclosures of my referred article and co-pending patent application are applicable to defining the piezoelectric elements or their mode of operation, the disclosures of the referred materials are herein incorporated by reference. Each of the vibrating elements 10 comprises a pair of rectangular piezoelectric bender crystals longitudinally aligned end to end but rotated 90° from one another. The secured crystal member (hereinafter described in more detail) is the "drive" crystal member and is designated at 10A in the Figures. The second crystal member is referred to as the "sense" crystal and is designated at 10B in the Figures. The drive crystal 10A and the sense crystal 10B are fixedly butted end to end to one another and are mounted for alignment about a "sense" axis (S), by means of an appropriate bonding agent, generally designated at 11.

The pair of vibrating crystal members 10 are constructed to be as identical to one another as possible in physical construction natural resonance and mass. One end of each of the drive crystal elements 10A is fixedly mounted to a base or mounting piece generally designated at 15. The base piece 15 is symmetrically configured about a mounting or nodal axis, generally designated at 20. The base piece comprises first and second mounting members respectively indicated at 15A and 15B. The mounting piece 15 material should have an acoustic stiffness equal to or greater than that of the crystal members 10. As is well known in the acoustic design art, material stiffness is a property relating to the propensity of the material to lose acoustic or vibrational energy. The stiffer a material is, the lower are its vibrational losses. In the preferred construction, the mounting piece 15 is brass; however, any other material having the desired stiffness could be used. The first mounting member 15A defines a generally "U"-shaped (as viewed from above) channel defining a pair of flat vertically oriented land surfces 16 (see Fig. 3), configured for uniformly engaging one side surface of the drive crystal member 10A. The second mounting member 15B is "T"-shaped and sized to fit within the "U"-shaped channel of the first mounting piece 15A. The mounting member 15B has a pair of flat vertically oriented land surfaces 17 configured for uniformly engaging

-10-

and sandwiching the retained ends of the drive crystals 10A between the opposed land areas 16 and 17 (see Fig. 3). An electrically insulating layer 12 is interposed between the mating surfaces of the first and second mounting members 15A and 15B and extends behind the secured ends of the drive crystals 10A, to insulate such ends from electrical contact with the mounting member 15A and to electrically isolate mounting pieces 15A and 15B from each other.

The mounting pieces 15A and 15B also function as electrodes or conductors for transmitting electrical signals to and from the drive crystals 10A. In a preferred construction of the sensor apparatus the opposing flat surfaces of the drive crystals 10A are soldered in place to the flat land areas 16 and 17 of the first and second mounting members 15A and 15B respectively (Figs. 1 and 3). The solder connections provide both electrical and mechanical connections for the drive crystals 10A to the mounting members 15A and 15B. The secured ends of the drive crystals 10A could also be secured in place by appropriate bonding agents such as epoxy or glue, and electrical connections thereto could be made by small wires or other electrical engagement means. Alternatively, the dimensions and tolerances of the mating portions of the first and second mounting pieces 15A and 15B could be such that the retained ends of the drive crystals 10A would be fixedly, frictionally held therebetween, and possibly even provide electrical contact to the drive crystals through such frictional engagement. Other mounting and electrical connection schemes will be readily apparent to those skilled in the art. To avoid stresses in the retained ends of the drive crystals 10A, it is preferrable that uniform conductive engagement be made between the land surfaces 16 and 17 of the electrode mounting pieces 15A and 15B and the engaged sides of the drive crystals

-11-

10A.

The first mounting piece 15A longitudinally extends outwardly along the nodal axis 20 to a "T"-shaped mounting bar, generally designated at 18, the end posts (18a) of which are secured to an appropriate base substrate 19 which could, for example, comprise a printed circuit board, housing or chassis of the sensor apparatus. The free end of the second mounting piece 15B also extends longitudinally outward along the nodal axis 20 to a mounting post, generally designated at 21, which is also secured to the substrate 19. The mounting connection of the electrode posts 21 and 18a provide electrical paths and/or contacts for the electrode base members 15A and 15B to the circuitry (not illustrated) located on or attached to or through the base substrate 19. As is illustrated in the figures, the mounting piece 15, as secured to the substrate 19 by the mounting posts 21 and 18a, suspends the vibrating crystal members 10 in cantilevered manner about their respective "sense" axes (S), symmetrically about the nodal axis 20, and above the upper surface of the substrate 19.

In the preferred construction of the sensor apparatus, the mounting base is constructed of brass, which also provides the desired electrical conductivity for the conductor/electrode function of the mounting piece; however, it is understood that other materials could equally well be used within the spirit and intent of this invention. Similarly, while the mounting piece 15 has been illustrated as serving an electrode function, it will be understood that either or both of the mounting pieces 15A or 15B could be employed as electrode members, or that neither would serve as an electrode, but that electrical connection to the drive crystals could be made by other means as, for example, through soldered wire connections.

-12-

Similarly, while a specific configuration of the mounting base 15 has been illustrated with respect to this embodiment of the invention, it will be understood that other configurations could equally well be employed within the spirit and intent of this invention. The primary consideration in the design of such mounting base is that when the vibrating sensor elements are operatively mounted thereby, they will be symmetrically mounted about the nodal axis for opposing vibration relative to one another thereabout, as will be described in more detail hereinafter. An advantage of the mounting configuration illustrated in description of the first embodiment of invention, and particularly with respect to the "T" configuration of the mounting extension 18, is that such "three-point" mounting structure provides for expansion along the nodal axis 20 due to temperature variations, imperfections in the mounting to the substrate 19 and the like, which expansion will relieve stress reflection back to the crystal members 10.

As above described, the drive crystals 10A are energized through the electrode base members 15A and 15B at their secured ends. Electrical signals generated by the piezoelectric sense crystals 10B caused by bending thereof in response to detected angular motion, are carried from the sense crystals by means of fine insulated wires 25 soldered to the opposed broad surfaces of the sense crystals. The wires 25 are mounted along the bending axes of the drive crystals 10A back toward the mounting piece 15, and are secured to or through circuitry (not illustrated) on or attached to or through the base substrate 19. The wires 25 may be interconnected by means of the external circuitry in any desired manner so as to analyze and use the signals generated by the sense crystals 10B. In the preferred construction, the wires 25 are interconnected by the external circuitry to electronically connect the sense crystals 10B in "parallel". In such arrangement, wires 25a and 25b are commonly connected as one terminal of the dual sensor arrangement, and wires 25b and 25c are connected to form the second terminal of the sense crystals 10B. As will be appreciated by those skilled in the art, the external connection could alternately be configured for connecting the sense crystal signals in "series", or to directly feed the respective signals from each of the sense crystals 10B into appropriate "mixing" circuitry.

If connected in series, the structure illustrated in Figures 1-3 could be externally wired such that wires 25b and 25d were connected to one another, with wires 25a and 25c providing the "output" terminals of the dual sense crystal structure. Alternatively, wires 25a and 25c could be connected to one another, with wires 25b and 25d providing the "output" terminals.

As will become apparent from a full reading of this specification it is not necessary to electrically connect the sense crystals 10B of "both" crystal members 10. While both drive crystals 10A should be energized to obtain the desired vibrational results of the entire sensor structure, it may be possible to obtain adequate "sensed" information from a single one of the sense crystal members 10B. This consideration applies equally well to other vibratory embodiments (i.e. non-crystal) of the invention.

As electrically connected, in the preferred embodiment, the opposing oscillatory motion of the sense crystals, caused by an angular "rate" motion to which the sensor apparatus is subjected, will produce signals from the sense crystals 10B which "add" together, such that common mode motions caused by acceleration or the like will be subtracted from one another, and thus cancel.

It will be understood that appropriate drive, sensing and detection circuitry (not illustrated herein)

-14-

can be operatively connected to the electrode terminals of the mounting piece 15 and to the output terminals of the sensing wires 25 to provide the desired functions, as is well-known in the art. See for example my co-pending patent application entitled Resonance Drive Oscillator Circuit, previously cited herein.

The sense crystal wires 25 are mounted along the planes of symmetry of the mounting system. Fine wires are used, to reduce as far as possible any undesirable radiation from or collection by the wires, of vibrational energy.

As previously stated, the pair of drive and sense crystals 10 are matched as closely as possible for the same natural resonance. In the preferred embodiment such matching is preferably within one hertz, and the sense crystal resonance is selected to be approximately 2,000 hertz. The short, stiff and lightweight vibrational crystal members 10, are energized to resonate at approximately 260 hertz, producing two data samples every cycle, such that a meaningful dynamic response of over 200 hertz is possible.

The tuning fork arrangement for mounting the vibrating members provides a simple and fully effective means of significantly reducing most of the error sources encountered in vibrating element angular rate sensors. The energy of vibration of the vibrating elements 10 is conserved by the tuning fork symmetry of the system, and virtually no vibrational energy is dispersed by the mounting structure to the substrate. Such structure significantly differs from known prior art angular rate sensor mounting configurations wherein energy leaving such prior art systems is typically reflected back into the system in varying amounts. Such reflective energy generally affects the sense crystal and causes erroneous and unstable readings. The structure of this invention also rejects externally generated vibrational energy by reason of its

-15-

unique compensating opposing symmetrical arrangement.

Sensitivity of the present invention is preserved, since it is only the lightweight sensing crystals (10B) themselves that are providing sensed readings, as opposed to those prior art sensing systems which measure oscillatory torque of the entire sensing assembly about a "general" sense axis. With the present invention, a relatively high resonant frequency can be obtained, providing increased bandwidth.

The present invention produces only a minor amount of torsional forces, yet keeps the sensitivity of the sense crystals 10B high. The sense crystals 10B are "whipped" by the drive crystals 10A, so that most of the vibrational energy appears at the "free" ends of the sense crystals. The free ends of the sense crystals are driven about their respective sense axes (S) as illustrated at (D) in Figure 3, in the oscillatory plane in which the sense axes (S) lie.

The drive crystals 10A drive the sense crystals 10B in a manner such that their respective movements are in direct opposition to one another (i.e. both simultaneously move respectively toward and away from the nodal axis 20 at the same time and at exactly the same rate). The cumulative vibrational forces from such movement which is reflected back through the drive crystals 10A to the mounting piece 15 is virtually zero, due to the "cancelling" effect of the opposing motions at the nodal axis.

The sense crystals respond to an "angular rate" movement (i.e. to a force perpendicular to both the angular motion and the "driven" motion) applied to the free ends of the sense crystals. The "forces" applied to the free ends of the two sense crystals 10B caused by the sensed angular motion, are in opposite directions, which forms a "couple" that results in a vibrational torsion about the nodal axis 20. Since the spacing of the "couple"

-16-

is small, and since very small forces are involved due to the low mass of the crystals, the resulting torque reflected to and through the mounting piece 15 is negligible. The presence of such "forces", does, however, produce a larger "bending" moment on the individual sense crystals 10B which is approximately ten times larger than the reflected system torque, and which causes the piezoelectric crystals to generate electrical signals proportional to the magnitude of the bending moments of the sense crystal. The large bending moments on the sense crystals provides improved system sensitivity while reducing radiated vibration and acoustic disturbances to practically zero.

While the invention has been above described with respect to a first embodiment, as applicable to piezoelectric vibrational sensor members, the principles of the invention apply equally well to other types of vibrational elements as well as to other modes of detection.

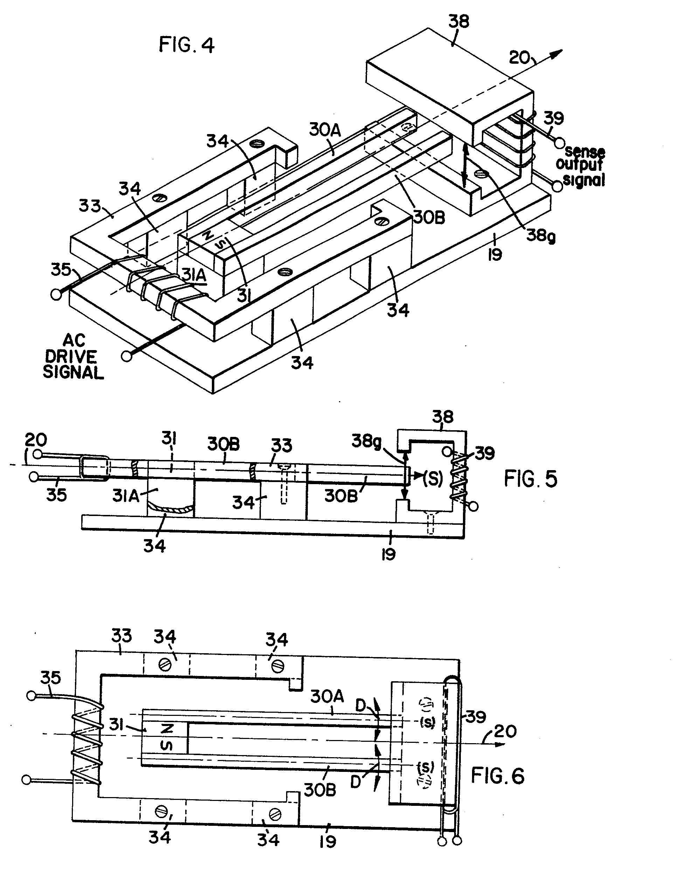

A second embodiment of the invention is disclosed in Figures 4 through 6. The second embodiment of the invention illustrates applicability of the invention to an electromagnetically actuated and responsive sensing system. The vibrating sensor elements are generally designated at 30A and 30B, and extend in cantilevered manner from a secured end to a free end. The secured ends of the vibrating elements 30A and 30B are fastened to the north and south poles respectively of a permanent magnet mounting block 31. The magnet 31 is mounted through a pedestal mounting base 31A to the underlying substrate 19. The vibrating elements 30A and 30B may be secured to the permanent magnet mounting base 31 by any appropriate attachment means. The vibrating elements 30A and 30B are mounted to the magnet 31 in a manner such that they respectively extend symmetrically along their respective sense axes (S) which are coplanar and parallel to one another and which are symmetrically disposed relative to

-17-

and are coplanar with the nodal axis 20. The vibrating sensor elements 30 are suspended in cantilevered manner and in spaced-apart relationship with respect to the upper surface of the underlying substrate 19.

The vibrating sensor elements 30 are driven by an electromagnetic driver core element 33 shaped in the preferred embodiment, in a generally horseshoe shape and fixedly mounted to the substrate by a plurality of mounting pedestals 34. The free, gap forming, ends of the drive core 33 are mounted in alignment and in juxtaposition with the vibrating elements 30A and 30B. The driver core 33 has one or a plurality of windings 35 wound thereabout, suitable for attachment to an appropriate AC current source (not illustrated), which when energized cause the driver core 33 to act as an electromagnet that alternately attracts and repels the vibrating elements 30A and 30B, causing the vibrating elements to oscillate in opposition to one another in the oscillatory plane defined by the sense axes (S). The energized electromagnetic driver core element 33 causes the vibrating elements 30A and 30B to alternatively respectively move toward and away from the nodal axis 20 in opposing relationship to one another, as illustrated in Fig. 6, and as was the case with respect to the piezoelectric crystal movement.

The free, ends of the vibrating elements 30A and 30B are aligned for movement within the "gap" of a core of a sensing coil, generally designated at 38. The gap of the sensing coil 38 is generally designated at 38g. The sensing coil 38 basically comprises a "C"-shaped core unit defining the gap 38g, that is fixedly mounted to the substrate 19 by appropriate mounting bolts or the like. One or a plurality of windings 39 around the core of the sensing coil are provided for detecting the sensed output signal.

The principle of operation of the second embodi-

-18-

ment of the invention is very similar to that previously described with respect to the first embodiment except that the sensed signal is detected electromagnetically and the drive mechanism for the vibrating elements is electromagnetic. An AC drive signal applied to the windings 35 of the drive core 33 generates an alternating electromagnetic drive force transmitted from the core 33 to the vibratory elements 30A and 30B, causing such elements to vibrate in opposition to one another in the oscillatory plane. Since oscillatory motion of the free ends of the vibrating elements 30A and 30B is in a single plane within the gap 38g of the output sensor core, no output signal will be established in the output windings 39. When the sensor apparatus is subjected to an angular rate movement, forces will be applied to the vibrating elements, causing their free ends to vibrate out of their normal oscillation plane, disturbing the magnetic field within the gap 38g of the sensor coil and producing a detectable output signal in the output windings 39. As with the first embodiment, due to the tuning fork mounting configuration of the vibrating elements 30A and 30B, no vibration energy will be transmitted through the mounting magnet and to the substrate 19 since the opposed motion of the vibrating elements 30A and 30B will null each other out along the nodal axis 20. Similarly, externally applied vibration or acceleration forces will not affect the vibration or sensing accuracy of the vibrating elements, since such forces will be nulled out by the tuning fork mounting arrangement. Similarly, as with the first embodiment of the invention, while movement of both vibrating elements 30A and 30B is illustrated as being sensed by the sensing coil 38, the principles of this invention would apply equally well to sensing of a single one of the vibrating elements.

An additional feature of the second embodiment

-19-

of the invention is that any alignment errors in the vibrating elements 30A and 30B can be nulled out simply by adjusting the rotational alignment of the output sensing electromagnet 38 around the nodal axis 20. This feature can significantly improve the sensitivity of the sensor unit by reducing synchronous noise. Another advantage of the electromagnetic construction is that such construction is fairly rugged, is easy to construct, and will withstand wider temperature ranges than will the piezoelectric construction previously described.

From the foregoing description, it will be appreciated that the present invention solves many of the problems or deficiencies associated with prior art vibrating element angular rate sensor configurations. It will be understood that while specific applications for the present invention, as used in association with piezoelectric crystal and electromagnetic activation vibration systems have been disclosed, the invention is also applicable to other actuator/ mass configurations and to other forms of drive and sensing modes of operation. For example, structures for sensing the stimulation of the vibrating elements employing electroptics or capacitance sensing modes could be easily adapted to the present invention. Further, while specific configurations of mounting and drive structures have been illustrated with respect to the piezoelectric and electromagnetic embodiments of the invention, it will be understood that other configurations employing the tuning fork mounting concept for the vibrational elements could equally well be employed.

Other modifications of the invention will be apparent to those skilled in the art in view of the foregoing descriptions. These descriptions are intended to provide specific examples of individual embodiments which clearly disclose the present invention. Accordingly, the invention is not limited to the described embodiments,

-20-

or to use of the specific elements or configurations contained therein. All alternative modifications and variations of the present invention which fall within the spirit and broad scope of the appended claims are covered.

# 0084704

-21-

CLAIMS :

1. Angular rate sensor apparatus, comprising:

(a) a pair of vibratory angular rate sensor elements;

(b) means for mounting said pair of angular rate sensor elements for physical vibration in direct opposition to one another about a nodal axis;

(c) means operatively connected with said sensor elements for energizing said sensor elements in a first mode of operation for opposing motion relative to one another about said nodal axis; whereby vibrational forces from said pair of elements cancel along said nodal axis such that transmission thereof through said mounting means is negligible; and

(d) sensing means operatively connected with at least one of said sensor elements for producing a sensed output signal in response to a change by said sensor element from its first vibrational mode of operation.

2. Angular rate sensor apparatus as recited in Claim 1 wherein said pair of vibratory angular rate sensor elements are physically and operatively identical to one another within acceptable operative tolerance limits.

3. Angular rate sensor apparatus as recited in Claim 1 wherein said pair of sensor elements are respectively symmetrically longitudinally disposed about first and second sense axes which are coplanar and parallel to one another.

4. Angular rate sensor apparatus as recited in Claim 3 wherein said sensor elements are mounted such that said sense axes are parallel to said nodal axis.

5. Angular rate sensor apparatus as recited in Claim 1, wherein said pair of sensor elements comprise

0084704

-22-

piezoelectric crystal members.

6. Angular rate sensor apparatus as recited in Claim 5, wherein said pair of piezoelectric crystal members are respectively longitudinally disposed along first and second parallel sense axes; wherein each of said piezoelectric crystal members comprises a drive crystal element and a sense crystal element and means for interconnecting said drive and said sense crystal elements in butted end to end configuration along said sense axis but oriented at 90° angles with respect to one another.

7. Angular rate sensor apparatus as recited in Claim 6, wherein said energization means comprises in part said drive crystal elements; wherein said drive crystal elements when energized respectively cause said sense crystal elements to oscillate in an oscillation plane in directions respectively directly opposed to one another about said nodal axis.

8. Angular rate sensor apparatus as recited in Claim 6, wherein said sensing means includes means for electrically connecting said piezoelectric sense crystal elements in parallel.

9. Angular rate sensor apparatus as recited in Claim 6, wherein said sensing means includes means for electrically connecting said piezoelectric sense crystal elements in series.

10. Angular rate sensor apparatus as recited in Claims 8 or 9 wherein said electrical connection means includes a pair of fine wires soldered to opposing surfaces respectively of each of said sense crystal elements.

11. Angular rate sensor apparatus as recited in Claim 5, wherein said mounting means comprises electrode means operatively connected with said piezoelectric crystal members for transmitting electrical current signals to said sensor elements.

12. Angular rate sensor apparatus as recited in

-23-

Claim 6, wherein said mounting means comprises electrode means operatively connected to energize said pair of piezoelectric drive crystal elements; whereby when electrically energized said driver crystal elements cause said pair of sense crystal elements to move in opposing vibrational motion relative to one another.

13. Angular rate sensor apparatus as recited in Claim 12, wherein said electrode means are soldered to said drive crystal elements.

14. Angular rate sensor apparatus as recited in Claims 1 or 5, wherein the vibrational stiffness of said mounting means equals or exceeds that of said sensor elements.

15. Angular rate sensor apparatus as recited in Claim 1, wherein said energizing means comprises an electromagnetic energizing source.

16. Angular rate sensor apparatus as recited in Claim 1 or 15, wherein said sensing means comprises electromagnetic sensing means.

17. Angular rate sensor apparatus as recited in Claim 15, wherein said pair of sensor elements comprises a pair of elongated vibratory magnetic elements mounted in extended cantilevered manner respectively symmetrically disposed along a pair of parallel sense axes.

18. Angular rate sensor apparatus as recited in Claim 17, wherein said sense axes are disposed generally parallel to said nodal axis.

19. An improved angular rate sensor apparatus comprising:

(a)   a support surface;

(b)   a pair of vibratory elements having substantially identical vibrational response characteristics;

(c)   mounting means operatively connected with said vibratory elements for supporting said

-24-

vibratory elements in cantilevered manner overlying said support surface in symmetrical orientation about a common nodal axis; and

(d) drive means operatively connected with said pair of vibratory elements for causing and maintaining movement of said vibratory elements in a first vibrational mode such that said pair of vibratory elements simultaneously move in direct opposition to one another about said nodal axis; wherein vibrational forces transmitted from said pair of moving vibratory elements to said mounting means cancel along said nodal axis.

20. Improved angular rate sensor apparatus as recited in Claim 19, wherein said mounting means includes one or more base members for securing said mounting means to said support surface, said base members being symmetrically disposed about said nodal axis.

21. Improved angular rate sensor apparatus as recited in Claim 19, wherein said vibratory elements comprise piezoelectric bender crystal elements; and wherein said mounting means comprises first and second electrodes configured to cooperatively supportively engage opposite surfaces of said crystal elements.

22. Improved angular sensor apparatus as recited in Claim 21, wherein said drive means comprises in part, said first and second electrodes; and further including soldered connections between said electrodes and said crystal elements.

23. Improved angular sensor apparatus as recited in Claim 21, wherein said first electrode includes a U-shaped receptor portion; and wherein said second electrode is configured to cooperatively mate with the U-shaped receptor member in a manner sandwiching said crystal elements between said second electrode and the opposing side wall portions of said U-shaped receptor.

24. Improved angular sensor apparatus as recited in Claim 19, including sensor means for detecting motion of at least one of said vibratory elements in a direction normal to the plane in which said one vibratory element moves during said first vibrational mode of operation.

25. Improved angular sensor apparatus as recited in Claim 24, wherein said sensor means comprises a piezoelectric bender crystal supported by and moving with said one vibratory element.

26. Improved angular sensor apparatus as recited in Claim 24, wherein said sensor means comprises an electromagnetically responsive sensor element.

27. Improved angular sensor apparatus as recited in Claim 19, wherein said pair of vibratory elements comprise a pair of magnetically responsive arms, and wherein said drive means comprises an electromagnetic drive structure.

28. Improved angular sensor apparatus as recited in Claim 27, including sensor means for detecting motion of at least one of said vibratory elements in a direction normal to the plane in which said one vibratory element moves during said first vibrational mode of operation.

29. Improved angular sensor apparatus as recited in Claim 28, wherein said one vibratory element extends from said mounting means to a free end; wherein said sensor means comprises an electromagnetic core sensor member defining a gap through which magnetic flux lines are normally established; and wherein said free end of said one vibratory element extends within said gap; whereby movement of said free end within the gap in a direction that disturbs the established magnetic flux lines is detected by said eletromagnetic core member.

-26-

30. Improved angular sensor apparatus as recited in Claim 19, wherein the vibratory stiffness of the material comprising said mounting means exceeds that of the material of said vibratory elements.

31. Improved angular sensor apparatus as recited in Claim 30, wherein the vibratory stiffness of said mounting means material substantially exceeds that of said vibratory elements.

32. Improved angular sensor apparatus as recited in Claim 29, wherein said electromagnetic core sensor member includes means for rotatably realigning the gap of the core member relative to the nodal axis to compensate for alignment errors between the vibrating elements.

1 / 2

FIG. 1

FIG. 2

FIG. 3

0084704

2/2

FIG. 4

FIG. 5

FIG. 6